# EUROPEAN PATENT SPECIFICATION

(11) **EP 2 545 609 B1**
(45) Date of publication and mention of the grant of the patent: **02.05.2018**
(21) Application number: 10712203.8
(22) Date of filing: 11.03.2010
(51) Int. Cl.: H01M 8/04089, H01M 8/241, H01M 8/023, H01M 8/1018, H01M 8/04119

(54) **OPEN FLOW FIELD FUEL CELL**
BRENNSTOFFZELLE MIT OFFENEM STRÖMUNGSFELD
PILE À COMBUSTIBLE À CHAMP D'ÉCOULEMENT OUVERT

(43) Date of publication of application: 16.01.2013
(73) Proprietor: Nuvera Fuel Cells, LLC, Billerica MA 01821 (US)
(72) Inventor: BLANCHET, Scott, C., Chelmsford MA 01824 (US); CROSS, James, C., III, Carlisle MA 01741 (US)
(74) Representative: Reitstötter Kinzebach
(86) International application number: PCT/US2010/027004
(87) International publication number: WO 2011/112195

(56) References cited:
- WO-A1-2008/072363
- WO-A1-2009/157981
- US-A- 5 565 072
- US-A1- 2002 182 472
- US-A1- 2009 136 802

## Description

The present disclosure is generally related to the field of polymer electrolyte membrane fuel cells.

A typical polymer electrolyte membrane ("PEM") fuel cell comprises a electrochemical package (ECP), which comprises a polymer membrane that serves as an electrolyte, an anode on one side of the polymer membrane, and a cathode on the other side of the membrane. The anode comprises an anode electrode catalyst. The reactant from the fuel gas, e.g., hydrogen, comes into contact with the anode electrode catalyst and may dissociate to produce protons. The polymer membrane, when adequately hydrated, allows protons to migrate across the membrane from the anode to the cathode. The cathode comprises a cathode electrode catalyst. The reactant from the cathode gas, e.g., oxygen, may form activated oxygen species on the cathode electrode catalyst, which react with the protons to form water. Such single fuel cells can be connected electrically in series to form a "fuel cell stack." US20020182472 discloses a PEM fuel cell stack with respective anode and cathode compartments.

The present disclosure provides a polymer electrolyte membrane fuel cell stack, which comprises a first bipolar plate, a second bipolar plate, an electrochemical package (ECP) comprising a cathode, an anode, and a polymer membrane interposed between the cathode and the anode. The ECP is disposed between the first and the second bipolar plate.

According to the disclosure, the polymer electrolyte membrane fuel cell stack comprises an anode compartment disposed between the first bipolar plate and the anode, as well as an cathode compartment disposed between the second bipolar plate and the cathode. The anode compartment comprises at least one inlet and at least one outlet so that the gas may enter and exit the compartment. In certain embodiments, the geometric area of the anode compartment is larger than the geometric area of the anode. In other embodiments, the geometric area of the cathode compartment is larger than the geometric area of the cathode. In further embodiments, the geometric area of the anode compartment is larger than the geometric area of the anode, and the geometric area of the cathode compartment is larger than the geometric area of the cathode.

In certain embodiments, there is a flowfield disposed inside the anode and/or the cathode compartment, and this flowfield may be chosen from, for example, a formed metal sheet with perforations, a metal foam, a graphite foam, an expanded metal mesh, a metal wire mesh, and a sintered porous metal sheet.

In certain other embodiments, the flowfield disposed inside the anode compartment and/or the cathode compartment may comprise at least two elements chosen from a formed metal sheet with perforations, a metal foam, a graphite foam, an expanded metal mesh, a metal wire mesh, and a sintered porous metal sheet.

In a further embodiment of the fuel cell disclosed herein, the first bipolar plate is a formed metal sheet without perforation. Examples of such a formed sheet include a formed metal sheet that comprises of protrusions in direct contact with the anode.

In some embodiments of the fuel cell stack according to the present disclosure, the geometric area of the anode is the same as the geometric area of the cathode. In other embodiments, the geometric area of the anode is different from the geometric area of the cathode.
Figures 1a-1c illustrate certain embodiments of the fuel cell stack provided in this disclosure.
Figure 2 illustrates another embodiment of the fuel cell stack.
Figure 3 presents experimental data comparing the performance of fuel cell stacks.

As disclosed herein, a membrane electrode assembly ("MEA") comprises a polymer membrane that comprises an anode on one side and a cathode on the reverse side. A conductive medium known as a gas diffusion layer ("GDL") can be attached or situated adjacent to either or both of the two sides of the MEA. The gas diffusion layer can be made of carbon paper, graphite cloth, or other porous, flexible, and electrically conductive materials, or composite assemblages thereof.

In certain embodiments, an electrode catalyst can be applied directly on the surface of the polymer membrane. In additional embodiments, the electrode catalyst can be incorporated into catalyst layer adjacent to the polymer membrane. Alternatively, the electrode catalyst can be applied on a gas diffusion layer, which is then chemically attached, mechanically attached, or placed adjacent to the polymer membrane, so that the electrode catalyst is interposed between the gas diffusion layer and the polymer membrane. In certain embodiments, the gas diffusion layer is not needed for the fuel cell to function.

As disclosed herein, an electrochemical package ("ECP") refers to a component comprising an MEA: (1) with gas diffusion layers attached to both sides; (2) with only one gas diffusion layer attached to one side; or (3) without a gas diffusion layer attached to it. Accordingly, the anode refers to the part of the ECP that contains the anode catalyst, and the cathode refers to the part of the ECP that contains the cathode catalyst, with or without a gas diffusion layer attached to it. An electrode refers to the anode or the cathode.

As used herein, the anode is exposed to a fuel gas (i.e., the anode gas) in a fuel cell. The reactant from the fuel gas, e.g., hydrogen, may experience catalytic reactions when coming into contact with the anode catalyst.

As used herein, the cathode is exposed to an oxidant gas (i.e., the cathode gas). The reactant from the cathode gas, e.g., oxygen, may experience catalytic reaction when coming into contact with the cathode catalyst.

As used herein, a fuel cell component is in direct contact with an electrode of the ECP if it can be in direct contact with the catalyst, in direct contact with the catalyst layer, or in direct contact with the gas diffusion layer. As used herein, the geometric area of an anode or a cathode refers to the projected, planar area of the portion of the polymer membrane that is covered by or otherwise in direct contact with an electrode catalyst, commonly referred to by those in the fuel cell industry as the active area of the anode or cathode.

As used herein, a separator plate, also known as a bipolar plate, refers to an electrically conductive gas barrier. The bipolar plate can be comprised of, for example, graphite or metal. The anode compartment refers to the space between a first bipolar plate and the anode, while the cathode compartment refers to the space between a second bipolar plate and the cathode. As used herein, a fuel cell compartment refers to either an anode compartment or a cathode compartment.

A fuel cell compartment can be enclosed at its periphery in the planar direction by a gas seal. The gas seal has openings that serve as gas inlets or outlets for the fuel cell compartment. The inlets and outlets of the compartment are fluidly connected to gas manifolds, which are fluid conduits connecting the inlets and a gas source, or connecting the outlets and a gas exit point. An example of a gas seal is a gasket with openings that allows gas to enter or exit the anode or cathode compartment.

As used herein, a flowfield is a structural element disposed between an ECP and a bipolar plate in a planar orientation in parallel with the bipolar plate, which allows gas to flow through and is enclosed at its periphery by a gas seal having inlets and outlets from one or more gas manifolds. Without structural support, a fuel cell compartment may collapse under pressure during the assembly of the fuel cell stack, making a significant portion of the electrode inaccessible to the reactant gas. A flowfield should thus have a certain degree of structural integrity so that it does not completely collapse under pressure.

A flowfield should also facilitate the even distribution of the reactant gas to the electrode. The contacting area between the flowfield and the electrode should be small so that most area of the electrode is accessible to the reactant gas but still maintain good electrical conductivity. Furthermore, it is desirable that the flowfield does not create excessive pressure drop in the reactant gas flow.

An open flowfield refers to a structure in which any point within flowfield may belong to several fluid pathways, i.e., multiple fluid pathways intersect at that point. For example, in an open flowfield, a fluid can follow two or more pathways from any point within the flowfield to an outlet. In contrast, in a flowfield that has discrete channels linking an inlet and an outlet, the fluid in one channel may only follow one pathway, defined by that channel, to the outlet.

One material suitable as an open flowfield is a porous foam. A piece of foam has a reticulated structure with an interconnected network of ligaments and interconnected voids within the geometric boundary defined by the contour of the metal foam. Because of this unique structure, the foam material in an uncompressed state can have a porosity that reaches greater than 50%, such as, for example, greater than 60%, greater than 70%, greater than 75%, greater than 80%, greater than 85%, greater than 90%, greater than 95%, and greater than 98%.

The network of interconnected voids form pathways that extend throughout the foam. Accordingly, a fluid entering the porous structure at one point on its geometric boundary may follow several different pathways to reach a location inside or at another boundary of the foam. The foam may be made of metal or graphite. For example, metal foams are commercially available from Porvair Advanced Materials, Inc. Graphite foams are also commercially available, for example, from Poco Graphite, Inc., Decatur, TX.

Another example of porous structures suitable as an open flowfield include expanded metal mesh. An expanded metal mesh is made from sheets of solid metal that are uniformly slit and stretched to create openings of certain geometric shapes, e.g., a diamond shape. In a standard expanded metal, each row of diamond-shaped openings is offset from the next, creating an uneven structure. The standard expanded metal sheet can be rolled to produce a flattened expanded metal. A metal wire mesh is also a porous structure suitable as an open flowfield. It can be made by weaving or welding metal wires together. Both metal wire mesh and expanded metal mesh are commercially available, for example, from Mechanical Metals, Inc. of Newtown, PA. When used as an open flowfield, the expanded metal mesh and the metal wire mesh may first be processed to form a non-flat geometric shape.

A further example of a porous structure suitable as an open flowfield is a formed metal sheet with perforations. As used herein, a formed metal sheet refers to a metal sheet that has a non-flat geometric shape. It may have a raised or embossed surface. It may be a corrugated metal sheet with undulating ridges and grooves. It may also have discontinuous indentations and protrusions.

Once provided with a sufficient number of perforations, a formed metal sheet may be used as an open flowfield, allowing fluids to flow in the fuel cell compartment with little restriction. Such a perforated metal sheet may have repeated arrays of perforations, e.g., round holes, hexagonal holes, square holes, slotted hole, etc. It can be stamped to form undulating ridges and grooves, or indentations and protrusions, or other geometric shapes. An example of perforated metal sheets that are commercially available can be obtained from McNichols Co., Tampa, FL.

A formed metal sheet without perforations may also serve as an open flowfield. One example is a formed metal sheet having arrays of protrusions. The tips of the protrusions contact the ECP, creating a continuous void space between the ECP and the rest of the metal sheet. As a result, a fluid can travel from one point in the continuous void to another through multiple pathways. In this case, the formed metal sheet can be interposed between the bipolar plate and the ECP. However, the bipolar plate itself can be a formed metal sheet so that it functions both as a gas separator and a flowfield.

A formed metal sheet may be made by a sheet metal forming process such as stamping. It may also form channels by removing part of the surface material, such as by etching and laser engraving, so that the thickness of the metal sheet varies. Enclosed channels may form between the raised surface of a formed metal sheet with an adjacent flat surface, such as an ECP.

In contrast to open flowfields, some non-open flowfields contain a plurality of discrete flow pathways that are physically separated and distinct from one another. An example of the latter is a graphite bipolar plate having discrete channels molded on its surface. Each channel connects an inlet with an outlet of the fuel cell compartment. In such a case, the ridges and valleys of the channels create a space between the bulk structure of the bipolar plate and the ECP, forming an enclosed pathway for the fluid to pass through. In this structure, aside from gas diffusion into the ECP, the bulk of the gas fluid flows within the channel from inlet to the outlet. The arrangement of channels may vary, for example, a channel may split into multiple channels and multiple channels may merge into one, therefore creating locations in the flowfield where multiple channels intersect. However, the number of such locations are finite, and in the majority of the flowfield the gas fluid has only one pathway, which is defined by the section of channel where the gas fluid resides.

As used herein, the shape of the fuel cell compartment refers to the shape of the compartment in the planar direction. It may be of any two-dimensional shape, for example, polygonal, curvilinear, or a combination thereof. The geometric area of the fuel cell compartment is the area of the anode or the cathode compartment in the planar direction. When a gasket is used to seal the fuel cell compartment (but leaving open certain inlets and outlets for the fluid), both the geometric shape and the geometric area of the fuel cell compartment are determined by the shape and size of the hollow center portion of the gasket.

In some embodiments of the present disclosure, the shape of the fuel cell compartment is substantially rectangular, meaning that the shape may be quadrilateral with four right angles, but also including those embodiments in which the one or more of the four corners of the rectangle are rounded. In certain embodiments, the inlets of the fuel cell compartment can be located at one side of the rectangle while the outlets are located on the opposite side.

In other embodiments of the present disclosure, the shape of the fuel cell compartment is curvilinear, e.g., circular, oval, or oblong. The fuel cell compartment may also be configured to have a hollow portion in the center, e.g., in the shape of a ring. However, the hollow portion as well as the outer periphery of the fuel cell compartment may adopt any shape, rectangular or curvilinear. In these designs, inlets of the fuel cell compartment may be located at the periphery of the hollow portion and the outlets may be located at the outer periphery, or vice versa.

In certain embodiments of the fuel cell stack disclosed herein, the geometric area of the anode compartment is larger than the geometric area of the anode. In other embodiments, the geometric area of the cathode compartment is larger than the geometric area of the cathode. In additional embodiments, the geometric area of the anode and/or cathode compartment is the same as the geometric area of the anode and/or cathode, respectively. For example, the geometric area of the fuel cell compartment may range from 2 cm² to 2400 cm² while the geometric area of the electrode may range from 2 cm² to 2000 cm².

Thus, the geometric area of the fuel cell compartment may for example range in certain embodiments from 25 cm² to 2000 cm², such as from 50 cm² to 1500 cm², from 75 cm² to 1250 cm², from 100 cm² to 1000 cm², from 150 cm² to 750 cm², from 175 cm² to 500 cm², and from 200 cm² to 350 cm². In other embodiments, the geometric area of the fuel cell compartment may range, for example, from 2 cm² to 100 cm², such as from 5 cm² to 75 cm², from 10 cm² to 50 cm², and from 15 cm² to 35 cm². In additional embodiments, the geometric area of the fuel cell compartment may range, for example, from 800 cm² to 2000 cm², such as from 900 cm² to 1700 cm², from 1000 cm² to 1500 cm², and from 1100 cm² to 1300 cm².

Similarly, the geometric area of the electrode may for example range in certain embodiments from 25 cm² to 2000 cm², such from 50 cm² to 1500 cm², from 75 cm² to 1250 cm², from 100 cm² to 1000 cm², from 150 cm² to 750 cm², from 175 cm² to 500 cm², and from 200 cm² to 300 cm². In other embodiments, the geometric area of the fuel cell compartment may range, for example, from 2 cm² to 100 cm², such as from 5 cm² to 75 cm², from 10 cm² to 50 cm², and from 15 cm² to 35 cm². In additional embodiments, the geometric area of the fuel cell compartment may range, for example, from 600 cm² to 2000 cm², such as from 700 cm² to 1500 cm², from 800 cm² to 1300 cm², and from 900 cm² to 1100 cm².

In an embodiment of the fuel cell stack disclosed herein, assuming a shortest distance between any of the at least one inlet of the anode compartment and the anode is m and the shortest distance between the same at least one inlet of the anode compartment and at least one outlet of the anode compartment is L, the value of m/L ranges from 1 to 30. Furthermore, this value may range from, for example, 1% to 20%, from 1% to 15%, from 2% to 25%, from 2% to 20%, from 2% to 15%, from 2% to 10%, from 3% to 20%, from 3% to 15%, from 3% to 10%, from 4% to 15%, from 4% to 10%, from 4% to 8%, from 5% to 12%, from 5% to 8%, and from 6% to 10%.

In another embodiment disclosed herein, assuming a shortest distance between any of the at least one outlet of the anode compartment and the anode is n and the shortest distance between any of the at least one inlet of the anode compartment and the same at least one outlet of the anode compartment is L, the value of n/L ranges from 1 to 30. Furthermore, this value may range from, for example, 1% to 20%, from 1% to 15%, from 2% to 25%, from 2% to 20%, from 2% to 15%, from 2% to 10%, from 3% to 20%, from 3% to 15%, from 3% to 10%, from 3% to 8%, and from 3% to 6%.

In an additional embodiment of the fuel cell stack disclosed herein, when the shortest distance between any of the at least one inlet of the cathode compartment and the cathode is m and the shortest distance between the same at least one inlet of the cathode compartment and at least one outlet of the cathode compartment is L, the value of m/L ranges from 1% to 30%, for example, from 1% to 20%, from 1% to 15%, from 2% to 25%, from 2% to 20%, from 2% to 15%, from 2% to 10%, from 3% to 20%, from 3% to 15%, from 3% to 10%, from 4% to 15%, from 4% to 10%, from 4% to 8%, from 5% to 12%, from 5% to 8%, and from 6% to 10%.

In a further embodiment disclosed herein, when a shortest distance between any of the at least one outlet of the cathode compartment and the cathode is n and the shortest distance between any of the at least one inlet of the cathode compartment and the same at least one outlet of the cathode compartment is L, the ratio of n/L ranges from 1% to 30%, for example, from 1% to 20%, from 1% to 15%, from 2% to 25%, from 2% to 20%, from 2% to 15%, from 2% to 10%, from 3% to 20%, from 3% to 15%, from 3% to 10%, from 3% to 8%, and from 3% to 6%.

As used herein, the shortest distance between an inlet and the anode or between an inlet and an outlet means the shortest distance that the fluid can travel from the inlet to the anode or outlet. Accordingly, when there is no barrier between the anode and a certain inlet, the shortest distance is the length of the shortest straight line linking the anode and the inlet. Likewise, assuming there is no barrier between an inlet and an outlet of a fuel cell compartment, the shortest distance is the length of the straight line linking the inlet and the outlet. However, if there is a barrier intersecting that straight line, the gas flow has to travel around the barrier, adding distance of the gas flow to the travel distance between the inlet and the outlet. In case of an open flowfield, such as with metal foam, where the porosity is high (e.g., larger than 50%) and the length scale of the structural material (i.e., the diameter of the ligament in a metal foam) is small (e.g., on the order of millimeters or less, for example ranging from 1 to 500 microns), the extra distance that the fluid travels to circumvent the structural material may be negligible.

In certain embodiments of the fuel cell stack disclosed herein, the flowfield may fill the entire fuel cell compartment. In this case, the shape and the geometric area of the flowfield is substantially the same as the fuel cell compartment. In certain other embodiments, the flowfield may occupy only a portion of the fuel cell compartment, leaving certain space within the compartment unfilled. In further embodiments, the flowfield may comprise different materials. For instance, one section of the flowfield may comprise a metal foam while others may contain a metal screen, a metal mesh, an expanded metal sheet, a graphite foam, a formed metal sheet with or without perforations, or a sintered porous metal sheet.

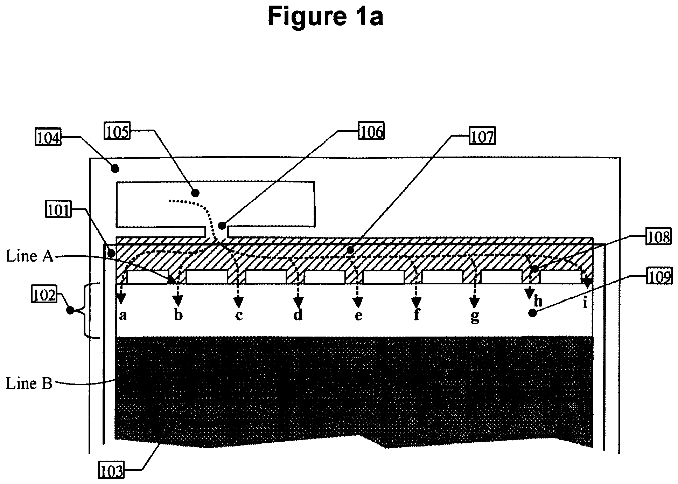

Figure 1a illustrates an embodiment of the fuel cell stack disclosed herein. Part 104 represents a gasket. Part 101 represents an ECP, which is placed in front of Part 104. The shaded area 103 represents the anode that is on the side of the ECP 101 that is away from the viewer. For the purpose of illustration, the ECP 101, other than the area of the anode 103, is shown to be transparent. A bipolar plate, not shown in Figure 1a for simplicity, is located behind the gasket 104. In this embodiment, the gasket 104 has a hollow center portion, while the ECP 101 and the bipolar plate have flat surfaces. In a assembled fuel cell, the ECP 101, the gasket 104, and the bipolar plate are pressed together, enclosing the center portion of the gasket 104 to form an anode compartment 109.

The shaded area 107 recedes from the rest of the surface of the gasket 104 and, when pressed against the ECP 101, forms a channel. Channel 107 has a series of openings 108a - 108i arranged in the shape of a comb. The anode gas enters channel 107 through opening 105. It flows from channel 107 into the anode compartment 109 through openings 108a -108i. Therefore, openings 108a - 108i are the inlets of the anode compartment.

As shown in Figure 1a, the anode 103 and the openings 108a -108i are not adjacent to each other. All the tips of openings 108a - 108i reside on Line A while the periphery of the anode is on Line B. In this case, Line A and Line B are substantially parallel so that the shortest distance between them is an imaginary line perpendicular to both Line A and Line B, the length of which is shown as 102.

Furthermore, since Line A and Line B are parallel in this embodiment, the shortest distance from any of the openings 108a - 108i to the anode is the same. This would not be true, however, in embodiments of fuel cell stacks where Line A and Line B are not parallel and/or are curvilinear. In those cases, it could be that only one of the inlet to the anode compartment can have the shortest distance to the anode.

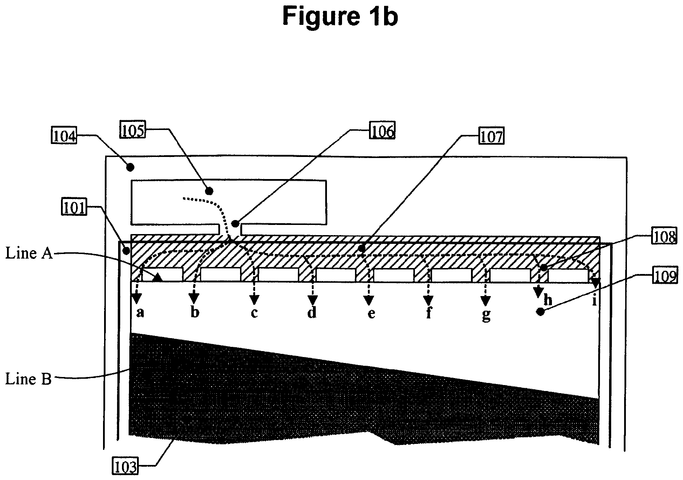

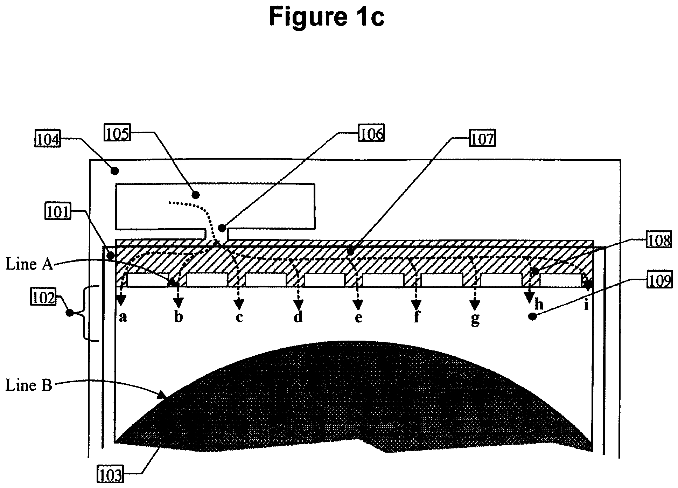

For example, Figure 1b shows an embodiment differing from the embodiment depicted in Figure 1a in that Line B in Figure 1b is slanted downward away from Line A. Consequently, only opening 108a has the shortest distance to Line B. In Figure 1c, Line B is a semicircle, and only opening 108e has the shortest distance to Line B in the embodiment depicted in this figure. The variations of the positional relations between the inlet of the anode compartment and the anode are numerous. Nevertheless, there is only one unique value for the shortest distance between any of the one or more inlets of the anode compartment to the anode.

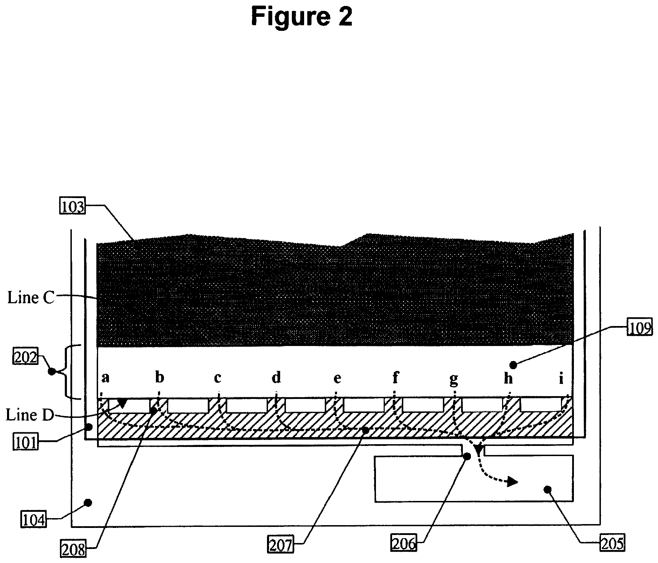

Figure 2 shows another embodiment in the fuel cell stack according to this disclosure. The same parts in Figure 1a and Figure 2 are labeled with the same numbers. The shaded area 207 represents a channel with openings 208a - 208i to the anode compartment 109. The openings 208a - 208i are the outlet of the anode compartment. The gas from the anode compartment 109 enters the channel 207 through openings 208a - 208i and exits the gasket 104 through opening 205. In this embodiment, the periphery of the anode 103, line C, is separated from Line D, where the tips of all the openings 208a - 208i reside.

The space between the inlets to the anode compartment and the anode may be filled with an open flowfield or left empty, creating a buffer zone in between. Since the anode gas enters the anode compartment through discrete inlets, the distribution of gas in the immediate vicinity of the inlets can be uneven. Without being bound to any particular theory, creating a buffer zone may allow the multiple anode gas streams to mix and develop into a more homogenous flow before coming into contact with the anode, which enhances the performance of the fuel cell. On the other hand, the buffer zone between the anode and the outlets of the anode compartment may benefit the performance of fuel cell by allowing liquid water to accumulate in the inert area of the ECP, therefore reducing the unwanted electrochemical reactions in that area.

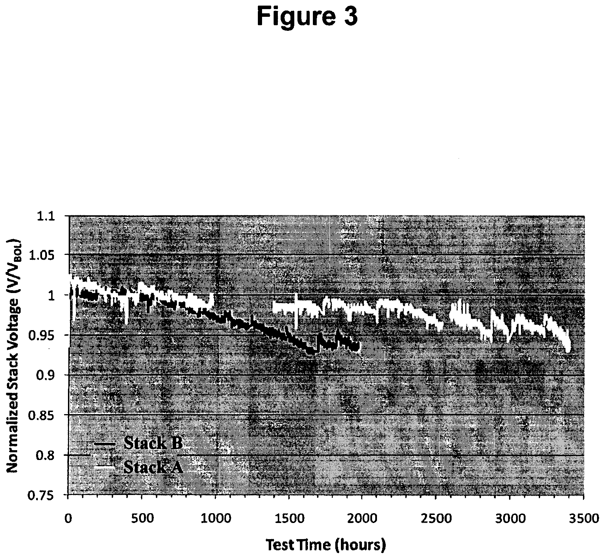

Figure 3 shows the stack voltage of a fuel cell stack in which there is an inert area between the inlet of the anode compartment and the anode (Stack A) in comparison to one in which the anode is immediately adjacent to the inlet of the anode compartment (Stack B). It was noticed that Stack A was in operation for about 3400 hrs before its stack voltage was lowered to about 0.93 V. Stack B, however, ran only about 2000 hrs before its stack voltage was dropped to about 0.93 V.

## Claims

1. A polymer electrolyte membrane fuel cell stack, comprising:
a first bipolar plate;
a second bipolar plate;
an electrochemical package comprising a cathode, an anode, and a polymer membrane interposed between the cathode and the anode;
an anode compartment disposed between the first bipolar plate and the anode, the anode compartment comprising at least one inlet and at least one outlet;
a cathode compartment disposed between the second bipolar plate and the cathode, the cathode compartment comprising at least one inlet and at least one outlet; and
wherein the geometric area of the anode compartment is larger than the geometric area of the anode, wherein a shortest distance between any of the at least one inlet of the anode compartment and the anode is m, a shortest distance between the same at least one inlet of the anode compartment to any of the at least one outlet of the anode compartment is L, and m/L ranges from 1 % to 30%
and/or
wherein the geometric area of the cathode compartment is larger than the geometric area of the cathode, wherein a shortest distance between any of the at least one inlet of the cathode compartment and the cathode is m, a shortest distance between the same at least one inlet of the cathode compartment to any of the at least one outlet of the cathode compartment is L, and m/L ranges from 1 % to 30%.

2. The fuel cell stack of claim 1, wherein m/L ranges from 2% to 25%, preferably from 4% to 15%.

3. The fuel cell stack of claim 1, wherein a shortest distance between any one of the at least one outlet of the anode compartment and the anode is n, a shortest distance between any of the at least one inlet of the anode compartment to the same at least one outlet of the anode compartment is L, and n/L ranges from 1 % to 30%.

4. The fuel cell stack of claim 1, wherein a shortest distance between any one of the at least one outlet of the cathode compartment and the cathode is n, a shortest distance between any of the at least one inlet of the cathode compartment to the same at least one outlet of the cathode compartment is L, and n/L ranges from 1 % to 30%.

5. The fuel cell stack of one of claims 3 or 4, wherein n/L ranges from 1 % to 15%, preferably from 2% to 10%.

6. The fuel cell stack of claim 1, further comprising a flowfield disposed inside the anode compartment and/or further comprising a flowfield disposed inside the cathode compartment.

7. The fuel cell stack of claim 6, wherein the flowfield is chosen from a formed metal sheet with perforations, a metal foam, a graphite foam, an expanded metal mesh, a metal wire mesh, and a sintered porous metal sheet.

8. The fuel cell stack of claim 7, wherein the flowfield comprises at least two materials chosen from a formed metal sheet with perforations, a metal foam, a graphite foam, an expanded metal mesh, a metal wire mesh, and a sintered porous metal sheet.

9. The fuel cell stack of claim 1, wherein the first bipolar plate and/or said second bipolar plate is a formed metal sheet without perforations.

10. The fuel cell stack of claim 9, wherein the formed metal sheet without perforations of said first bipolar plate further comprises protrusions in direct contact with the anode and/or wherein the formed metal sheet without perforations of said second bipolar plate further comprises protrusions in direct contact with the cathode.

11. The fuel cell stack of claim 1, wherein the geometric area of the cathode equals the geometric area of the anode.

12. The fuel cell stack of claim 1, wherein the geometric shape of the anode compartment and/or the geometric shape of the cathode compartment is substantially rectangular, having at least one inlet at one side of the rectangle and at least one outlet at the opposite side of the rectangle.

13. The fuel cell stack of claim 1, wherein the geometric shape of the anode compartment and/or the geometric shape of the cathode compartment is curvilinear.

14. The fuel cell stack of claim 1, wherein the geometric area of the anode compartment and/or the geometric area of the cathode compartment ranges from 2 cm² to 2400 cm².

15. The fuel cell stack of claim 1, wherein the geometric area of the anode and/or the geometric area of the cathode ranges from 2 cm² to 2000 cm².

## Patentansprüche

1. Polymer-Elektrolyt-Membran-Brennstoffzellenstapel, umfassend:
eine erste Bipolarplatte;
eine zweite Bipolarplatte;
eine elektrochemische Packung mit einer Kathode, einer Anode und einer zwischen der Kathode und der Anode angeordneten Polymermembran;
eine zwischen der ersten Bipolarplatte und der Anode angeordnete Anodenkammer, wobei die Anodenkammer zumindest einen Einlass und zumindest einen Auslass umfasst;
eine zwischen der zweiten Bipolarplatte und der Kathode angeordnete Kathodenkammer, wobei die Kathodenkammer zumindest einen Einlass und zumindest einen Auslass umfasst; und
wobei die geometrische Fläche der Anodenkammer größer ist als die geometrische Fläche der Anode, wobei der kürzeste Abstand zwischen jeweils dem zumindest einen Einlass der Anodenkammer und der Anode m beträgt, wobei ein kürzester Abstand zwischen demselben zumindest einen Einlass der Anodenkammer und jeweils dem zumindest einen Auslass der Anodenkammer L beträgt und m/L im Bereich von 1 % bis 30 % liegt, und/oder
wobei die geometrische Fläche der Kathodenkammer größer ist als die geometrische Fläche der Kathode, wobei der kürzeste Abstand zwischen jeweils dem zumindest einen Einlass der Kathodenkammer und der Kathode m beträgt, wobei ein kürzester Abstand zwischen demselben zumindest einen Einlass der Kathodenkammer und jeweils dem zumindest einen Einlass der Kathodenkammer L beträgt und wobei m/L im Bereich von 1 % bis 30 % liegt.

2. Brennstoffzellenstapel gemäß Anspruch 1, wobei m/L im Bereich von 2 % bis 25 %, bevorzugt von 4 % bis 15 %, liegt.

3. Brennstoffzellenstapel gemäß Anspruch 1, wobei ein kürzester Abstand zwischen jeweils dem zumindest einen Auslass der Anodenkammer und der Anode n beträgt, ein kürzester Abstand zwischen jeweils dem zumindest einen Einlass der Anodenkammer und demselben zumindest einen Auslass der Anodenkammer L beträgt und n/L im Bereich von 1 % bis 30 % liegt.

4. Brennstoffzellenstapel gemäß Anspruch 1, wobei ein kürzester Abstand zwischen jeweils dem zumindest einen Auslass der Kathodenkammer und der Kathode n beträgt, ein kürzester Abstand zwischen jeweils dem zumindest einen Einlass der Kathodenkammer und demselben zumindest einen Auslass der Kathodenkammer L beträgt und n/L im Bereich von 1 % bis 30 % liegt.

5. Brennstoffzellenstapel gemäß einem der Ansprüche 3 oder 4, wobei n/L im Bereich von 1 % bis 15 %, bevorzugt von 2 % bis 10 %, liegt.

6. Brennstoffzellenstapel gemäß Anspruch 1, ferner umfassend ein in der Anodenkammer angeordnetes Strömungsfeld und/oder ferner umfassend ein in der Kathodenkammer angeordnetes Strömungsfeld.

7. Brennstoffzellenstapel gemäß Anspruch 6, wobei das Strömungsfeld ausgewählt ist zwischen einem geformten Metallblech mit Perforationen, einem Metallschaum, einem Graphitschaum, einem Streckmetallgitter, einem Metalldrahtgitter und einem gesinterten porösen Metallblech.

8. Brennstoffzellenstapel gemäß Anspruch 7, wobei das Strömungsfeld zumindest zwei Materialien umfasst, ausgewählt zwischen einem geformten Metallblech mit Perforationen, einem Metallschaum, einem Graphitschaum, einem Streckmetallgitter, einem Metalldrahtgitter und einem gesinterten porösen Metallblech.

9. Brennstoffzellenstapel gemäß Anspruch 1, wobei die erste Bipolarplatte und/oder die zweite Bipolarplatte einen geformtes Metallblech ohne Perforationen ist.

10. Brennstoffzellenstapel gemäß Anspruch 9, wobei das geformte Metallblech ohne Perforationen der ersten Bipolarplatte ferner Vorsprünge in direktem Kontakt mit der Anode umfasst und/oder wobei das geformte Metallblech ohne Perforationen der zweiten Bipolarplatte ferner Vorsprünge in direktem Kontakt mit der Kathode umfasst.

11. Brennstoffzellenstapel gemäß Anspruch 1, wobei die geometrische Fläche der Kathode gleich der geometrischen Fläche der Anode ist.

12. Brennstoffzellenstapel gemäß Anspruch 1, wobei die geometrische Form der Anodenkammer und/oder die geometrische Form der Kathodenkammer im Wesentlichen rechteckig ist, mit zumindest einem Einlass auf einer Seite des Rechtecks und zumindest einem Auslass auf der gegenüberliegenden Seite des Rechtecks.

13. Brennstoffzellenstapel gemäß Anspruch 1, wobei die geometrische Form der Anodenkammer und/oder die geometrische Form der Kathodenkammer Kurven förmlich gekrümmt ist.

14. Brennstoffzellenstapel gemäß Anspruch 1, wobei die geometrische Fläche der Anodenkammer und/oder die geometrische Fläche der Kathodenkammer im Bereich von 2 cm² bis 2400 cm² liegt.

15. Brennstoffzellenstapel gemäß Anspruch 1, wobei die geometrische Fläche der Anode und/oder die geometrische Fläche der Kathode im Bereich von 2 cm² bis 2000 cm² liegt.

## Revendications

1. Empilement de piles à combustible à membrane électrolyte polymère, comprenant :
une première plaque bipolaire ;
une deuxième plaque bipolaire ;
un ensemble électrochimique comprenant une cathode, une anode, et une membrane polymère interposée entre la cathode et l'anode ;
un compartiment anodique disposé entre la première plaque bipolaire et l'anode, le compartiment anodique comprenant au moins un orifice d'entrée et au moins un orifice de sortie ;
un compartiment cathodique disposé entre la deuxième plaque bipolaire et la cathode, le compartiment cathodique comprenant au moins un orifice d'entrée et au moins un orifice de sortie ; et
dans lequel l'aire géométrique du compartiment anodique est plus grande que l'aire géométrique de l'anode, une distance la plus courte entre l'un quelconque de l'au moins un orifice d'entrée du compartiment anodique et l'anode étant m, une distance la plus courte entre le même au moins un orifice d'entrée du compartiment anodique à l'un quelconque de l'au moins un orifice de sortie du compartiment anodique étant L, et m/L étant compris dans la plage de 1 % à 30 %,
et/ou
dans lequel l'aire géométrique du compartiment cathodique est plus grande que l'aire géométrique de la cathode, une distance la plus courte entre l'un quelconque de l'au moins un orifice d'entrée du compartiment cathodique et la cathode étant m, une distance la plus courte entre le même au moins un orifice d'entrée du compartiment cathodique à l'un quelconque de l'au moins un orifice de sortie du compartiment cathodique étant L, et m/L étant compris dans la plage de 1 % à 30%.

2. Empilement de piles à combustible selon la revendication 1, dans lequel m/L est compris dans la plage de 2 % à 25 %, de préférence de 4 % à 15 %.

3. Empilement de piles à combustible selon la revendication 1, dans lequel une distance la plus courte entre l'un quelconque de l'au moins un orifice de sortie du compartiment anodique et l'anode est n, une distance la plus courte entre l'un quelconque de l'au moins un orifice d'entrée du compartiment anodique et au même au moins un orifice de sortie du compartiment anodique est L, et n/L est compris dans la plage de 1 % à 30 %.

4. Empilement de piles à combustible selon la revendication 1, dans lequel une distance la plus courte entre l'un quelconque de l'au moins un orifice de sortie du compartiment cathodique et la cathode est n, une distance la plus courte entre l'un quelconque de l'au moins un orifice d'entrée du compartiment cathodique et au même au moins un orifice de sortie du compartiment cathodique est L, et n/L est compris dans la plage de 1% à 30%.

5. Empilement de piles à combustible selon une des revendications 3 ou 4, dans lequel n/L est compris dans la plage de 1 % à 15 %, de préférence de 2 % à 10 %.

6. Empilement de piles à combustible selon la revendication 1, comprenant en outre un champ d'écoulement disposé à l'intérieur du compartiment anodique et/ou comprenant en outre un champ d'écoulement disposé à l'intérieur du compartiment cathodique.

7. Empilement de piles à combustible selon la revendication 6, dans lequel le champ d'écoulement est choisi parmi une tôle métallique formée comportant des perforations, une mousse métallique, une mousse de graphite, une latte de métal déployée, un treillis métallique et une tôle métallique poreuse frittée.

8. Empilement de piles à combustible selon la revendication 7, dans lequel le champ d'écoulement comprend au moins deux matériaux choisis parmi une tôle métallique formée comprenant des perforations, une mousse métallique, une mousse de graphite, une latte de métal déployée, un treillis métallique et une tôle métallique poreuse frittée.

9. Empilement de piles à combustible selon la revendication 1, dans lequel la première plaque bipolaire et/ou la deuxième plaque bipolaire sont des tôles métalliques formées, sans perforations.

10. Empilement de piles à combustible selon la revendication 9, dans lequel la tôle métallique formée, sans perforations, de ladite première plaque bipolaire comprend en outre des saillies en contact direct avec l'anode, et/ou dans lequel la tôle métallique formée, sans perforations, de ladite deuxième plaque bipolaire comprend en outre des saillies en contact direct avec la cathode.

11. Empilement de piles à combustible selon la revendication 1, dans lequel l'aire géométrique de la cathode est égale à l'aire géométrique de l'anode.

12. Empilement de piles à combustible selon la revendication 1, dans lequel la forme géométrique du compartiment anodique et/ou la forme géométrique du compartiment cathodique sont sensiblement rectangulaires, ayant au moins un orifice d'entrée sur un côté du rectangle et au moins un orifice de sortie sur le côté opposé du rectangle.

13. Empilement de piles à combustible selon la revendication 1, dans lequel la forme géométrique du compartiment anodique et/ou la forme géométrique du compartiment cathodique sont curvilinéaires.

14. Empilement de piles à combustible selon la revendication 1, dans lequel l'aire géométrique du compartiment anodique et/ou l'aire géométrique du compartiment cathodique sont comprises dans la plage de 2 cm² à 2400 cm².

15. Empilement de piles à combustible selon la revendication 1, dans lequel l'aire géométrique de l'anode et/ou l'aire géométrique de la cathode sont comprises dans la plage de 2 cm² à 2000 cm².
